# EUROPÄISCHE PATENTANMELDUNG

(11) **EP 0 924 013 A1**
(43) Veröffentlichungstag der Anmeldung: **23.06.1999**
(21) Anmeldenummer: 98123439.6
(22) Anmeldetag: 09.12.1998
(51) Int. Cl.: B23B 41/02

(54) **Vorrichtung zur Finish-Bearbeitung von tiefen Lagerbohrungen**

(30) Priorität: 20.12.1997 DE 19756993
(71) Anmelder: Hüller Hille GmbH, 71636 Ludwigsburg (DE)
(72) Erfinder: Horn, Wolfgang Dr., 74385 Pleidelsheim (DE); Wunderlich, Armin, 74395 Mundelsheim (DE); Faber, Klaus, 71642 Ludwigsburg (DE)
(74) Vertreter: Dahlkamp, Heinrich-Leopold, Dipl.-Ing.

(57) **Zusammenfassung**

Eine präzise Finish-Bearbeitung der Lagerbohrungen (25) an Kurbelgehäusen (26) wird ermöglicht durch eine Vorrichtung mit zwei schlittengeführten Spindelkästen (1, 2), deren antreibbare Spindeln miteinander fluchten, von denen eine Spindel als Arbeitsspindel (3) ausgebildet ist, die ein radial verstellbares Werkzeug (11) trägt, während die andere Spindel als Führungsspindel (4) ausgebildet ist, die mit einem Führungszapfen (6) in eine stirnseitige Bohrung (5) der Arbeitsspindel (3) eingreift, wobei an den Führungszapfen (6) ein Konus (7) anschließt, auf dem das verstellbare Werkzeug (11) abgestützt ist, und wobei zwischen dem Konus (7) und dem Grund (12) der Bohrung (5) ein Meßtaster (14) angeordnet ist, dessen Meßsignal zur Steuerung des Abstandes der beiden Spindelkästen (1, 2) und damit der radialen Auslenkung des Werkzeuges (11) dient.

## Beschreibung

Die Finish-Bearbeitung von Lagerbohrungen an Kurbelgehäusen erfolgt in der Praxis mit Hilfe einer Vorrichtung (Bohrwerk), die eine einzige Spindel aufweist, an deren freien Ende ein Werkzeug befestigt ist. Insbesondere bei Kurbelgehäusen mit einer Mehrzahl von Lagerbohrungen muss die Spindel entsprechend lang sein. Dabei können die zwischen dem Werkzeug und dem Werkstück auftretenden Reaktionskräften zu unkontrollierbaren Verformungen der Spindel führen. Hinzu kommt, dass die Einstellung bzw. Nachstellung des Werkzeuges schwierig ist. Das alles kann zu Beeinträchtigungen des Bearbeitungsergebnisses führen.

Aufgabe der Erfindung ist es, eine präzise Finish-Bearbeitung der Lagerbohrungen an Kurbelgehäusen zu ermöglichen.

Diese Aufgabe wird gelöst mit einer Vorrichtung zur Finish-Bearbeitung der Lagerbohrungen an Kurbelgehäusen mit zwei schlittengeführten Spindelkästen, deren antreibbare Spindeln miteinander fluchten, von denen eine Spindel als Arbeitsspindel ausgebildet ist, die ein radial verstellbares Werkzeug trägt, während die andere Spindel als Führungsspindel ausgebildet ist, die mit einem Führungszapfen in eine stirnseitige Bohrung der Arbeitsspindel eingreift, wobei an den Führungszapfen ein Konus anschließt, an dem das verstellbare Werkzeug abgestützt ist. Vorzugsweise ist zwischen dem Konus und dem Grund der Bohrung ein Meßtaster angeordnet, dessen Meßsignal zur Steuerung des Abstandes der beiden Spindelkästen und damit der radialen Auslenkung des Werkzeuges dient. - Bei dieser Vorrichtung werden die zwischen Werkzeug und Werkstück auftretenden Reaktionskräfte nicht nur von der Arbeitsspindel sondern auch von der Führungsspindel aufgenommen, sodass mögliche Deformationen auf ein Minimum reduziert werden. Gleichzeitig wird die radiale Einstellung des Werkzeuges vereinfacht, weil der Abstand der beiden Spindelkästen und damit die radiale Auslenkung bzw. Einstellung des Werkzeuges vom Meßsignal des Meßtasters gesteuert oder geregelt wird.

Vorzugsweise ist das Werkzeug an einem federnden Werkzeughalter befestigt, der einerseits an der Arbeitsspindel befestigt ist und andererseits auf dem Konus abgestützt ist. Die federnde Anlage des Werkzeughalters und damit des Werkzeuges am Konus stellt sicher, dass der Werkzeughalter bzw. das Werkzeug stets die gewünschte Position einnehmen.

An der Arbeitsspindel können weitere Werkzeuge für eine Semi-Finish-Bearbeitung befestigt sein.

Bei einer bevorzugten Ausführung weist die Führungsspindel eine Meßeinrichtung mit wenigstens einem in einer radialen Bohrung geführten Meßdorn auf, sodass es möglich ist, das jeweilige Bearbeitungsergebnis unmittelbar zu kontrollieren. Dazu kann der Meßdorn auf einem in einer Längsbohrung der Führungsspindel verschiebbaren Konus oder Keil abgestützt sein und ein Meßtaster zum Erfassen der Position des Konus oder Keils vorgesehen sein. Zweckmäßig geht die Längsbohrung von der arbeitsspindelseitigen Stirnfläche der Führungsspindel aus und ist mit einem Deckel verschlossen, der den Führungszapfen trägt. Der Konus oder Keil mit Hilfe eines Stelltriebs in der Längsbohrung verschiebbar, vorzugsweise mit einem in der Längsbohrung untergebrachten Hubzylinder. Der Meßtaster kann dann zwischen dem Deckel und der freien Stirnseite des Konus oder Keils angeordnet sein.

Vorzugsweise sind sowohl der zur Arbeitsspindel gehörende Meßtaster als auch der zur Führungsspindel gehörende Meßtaster als induktive Meßtaster ausgebildet. Die Übertragung der von den Meßtastern abgegebenen Meßsignale kann durch Infrarot-Datenübertragung erfolgen.

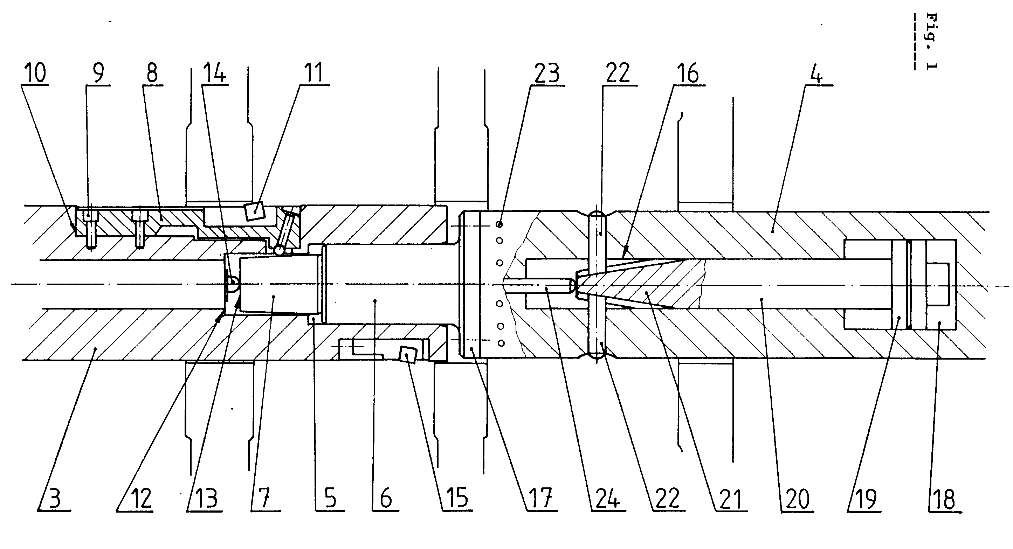

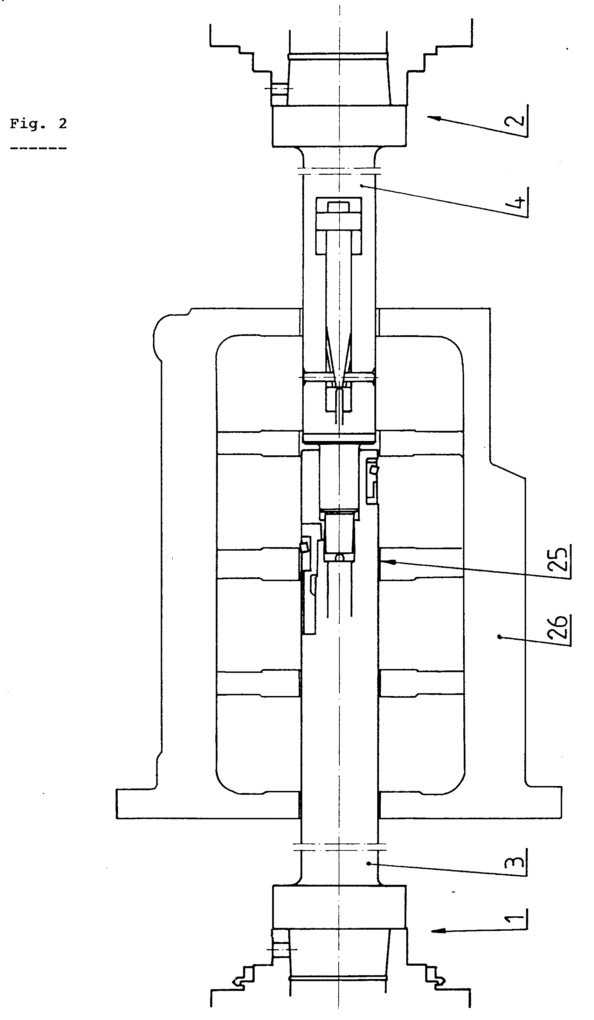

Die Erfindung wird anhand der beigefügten Figuren 1 und 2 beispielsweise näher erläutert.
- Fig. 1: zeigt schematisch und teilweise einen Vertikalschnitt durch eine Vorrichtung zur Finish-Bearbeitung von Lagerbohrungen an Kurbelgehäusen
- Fig. 2: ist ein vergrößerter Schnitt zu Fig. 1.

In Fig. 1 sind auf einem nicht dargestellten Schlitten zwei daran geführte Spindelkästen 1, 2 einander gegenüberliegend angeordnet. Die Spindelkästen 1, 2 besitzen nicht dargestellte Antriebe, mit denen sie längs des Schlittens bewegt werden können. In jedem Spindelkasten 1 bzw. 2 ist jeweils eine antreibbare Spindel gelagert, von denen die eine Spindel als Arbeitsspindel 3 und die andere Spindel als Führungsspindel 4 ausgebildet ist.

Nach Fig. 2 weist die Arbeitsspindel 3 eine von ihrer freien Stirnfläche ausgehende Stufenbohrung 5 auf, in deren Abschnitt mit größerem Durchmesser ein Führungszapfen 6 geführt ist, der sich an die Stirnseite der Führungsspindel 4 anschließt. In den Abschnitt mit kleinerem Durchmesser der Stufenbohrung 5 greift ein an den Führungszapfen 6 anschließender Konus 7 ein, der bei der dargestellten Ausführung einen Konuswinkel von ca. 1,5 ° besitst. Auf dem Konus 7 ist das freie Ende eines federnden Werkzeughalters 8 abgestützt, dessen anderes Ende mit einer Schraubbefestigung 9 in einer umfangsseitigen Ausnehmung 10 der Arbeitsspindel 3 befestigt ist. Der Werkzeughalter 8 trägt ein Werkzeug 11.

Zwischen dem Grund 12 der Stufenbohrung 5 und der freien Stirnseite 13 des Konus 7 befindet sich ein induktiver Meßtaster 14, dessen Meßsignale über eine nicht dargestellte Infrarot-Datenübertragung an die Steuerung der Antriebe für die Bewegung der Spindelkästen 1, 2 auf dem Schlitten übermittelt werden.

Am Außenumfang der Arbeitsspindel 3 ist mit axialem Abstand zum Werkzeug 11 zumindest ein Semi-Finish-Werkzeug 15 angeordnet.

Die Führungsspindel 4 weist eine von ihrer freien Lenkseite ausgehende Längsbohrung 16 auf, die stirnseitig mit einem Deckel 17 verschlossen ist. Dieser Deckel 17 trägt den Führungszapfen 6 mit dem Konus 7. Das andere Ende der Längsbohrung 16 ist erweitert, sodass ein Arbeitsraum 18 für einen daran verschieblichen Kolben 19 gebildet ist. Eine an den Kolben 19 anschließende Kolbenstange 20 geht in einen Konus 21 über, auf den bei der dargestellten Ausführung 2 einander radial gegenüberliegende und in radialen Bohrungen geführte Meßdorne 22 abgestützt sind. Die Meßdorne 22 weisen durch Pfeile 23 angedeutete Blasdüsen auf. Fluidleitungen zur Versorgung des Arbeitsraums 18 und der Blasdüsen sind nicht dargestellt. Zwischen dem Deckel 17 und der freien Stirnseite des Konus oder Keils 21 ist ein induktiver Meßtaster 24 angeordnet, dessen Meßsignale ebenfalls durch induktive Datenübertragung übermittelt werden.

Die dargestellte Vorrichtung arbeitet wir folgt: Nach einer Semi-Finish-Bearbeitung wird durch gesteuerte Bewegung der Spindelkästen 1 und 2 das Werkzeug 11 in den Bereich einer Lagerbohrung 25 des Kurbelgehäuses 26 bewegt. Die radiale Auslenkung des Werkzeugs 11 wird durch Veränderung des gegenseitigen Abstandes der beiden Spindelkästen 1 und 2 eingestellt. Dann kann die Finish-Bearbeitung erfolgen. Nach Absshluß der Finish-Bearbeitung werden die beiden Spindelkästen 1 und 2 soweit verfahren, dass die Meßdorne 22 in den Bereich der bearbeiteten Lagerbohrung 25 gelangen.

Das aus den Blasdüsen austretende Fluid reinigt die bearbeitete Oberfläche. Durch die Fluidbeaufschlagung des Kolbens 19 werden die Meßdorne 22 ausgefahren, bis sie an der bearbeiteten Oberfläche anliegen. Der Meßtaster 24 erfaßt diese Position. Je nach dem Meßergebnis wird die Finish-Bearbeitung wiederholt oder beendet.

### Bezugszeichenliste:

- 1: Spindelkasten
- 2: Spindelkasten
- 3: Arbeitsspindel
- 4: Führungsspindel
- 5: Stufenbohrung
- 6: Führungszapfen
- 7: Konus
- 8: Werkzeughalter
- 9: Schraubbefestigung
- 10: Ausnehmung
- 11: Werkzeug
- 12: Grund
- 13: Stirnseite
- 14: Meßtaster
- 15: Werkzeug
- 16: Längsbohrung
- 17: Deckel
- 18: Arbeitsraum
- 19: Kolben
- 20: Kolbenstange
- 21: Konus/Keil
- 22: Meßdorn
- 23: Pfeil
- 24: Meßtaster
- 25: Lagerbohrung
- 26: Kurbelgehäuse

## Patentansprüche

1. Vorrichtung zur Finish-Bearbeitung von Lagerbohrungen (25) an Kurbelgehäusen (26) mit zwei schlittengeführten Spindelkästen (1, 2), deren antreibbare Spindeln miteinander fluchten, von denen eine Spindel als Arbeitsspindel (3) ausgebildet ist, die ein radial verstellbares Werkzeug (11) trägt, während die andere Spindel als Führungsspindel (4) ausgebildet ist, die mit einem Führungszapfen (6) in eine stirnseitige Bohrung (5) der Arbeitsspindel (3) eingreift, wobei an den Führungszapfen (6) ein Konus (7) anschließt, auf dem das verstellbare Werkzeug (11) abgestützt ist.

2. Vorrichtung nach Anspruch 1**, dadurch gekennzeichnet,** dass zwischen dem Konus (7) und dem Grund (12) der Bohrung (5) ein Meßtaster (14) angeordnet ist, dessen Meßsignal zur Steuerung des Abstandes der beiden Spindelkästen (1, 2) und damit der radialen Auslenkung des Werkzeuges (11) dient.

3. Vorrichtung nach Anspruch 1 oder 2, **dadurch gekennzeichnet,** dass das Werkzeug (11) an einem federnden Werkzeughalter (8) befestigt ist, der einerseits an der Arbeitsspindel (3) befestigt und andererseits auf dem Konus (7) abgestützt ist.

4. Vorrichtung nach Anspruch 1, 2 oder 3, **dadurch gekennzeichnet,** dass an der Arbeitsspindel (3) zumindest ein Werkzeug (15) für eine Semi-Finish-Bearbeitung befestigt ist.

5. Vorrichtung nach einem der Ansprüche 1 bis 4, **dadurch gekennzeichnet,** dass die Führungsspindel (4) eine Meßeinrichtung mit wenigstens einem in einer radialen Bohrung geführten Meßdorn (22) aufweist.

6. Vorrichtung nach einem der Ansprüche 1 bis 5, **dadurch gekennzeichnet,** dass der Meßdorn (22) auf einem in einer Längsbohrung (16) der Führungsspindel (4) verschiebbaren Konus oder Keil (21) abgestützt ist und dass ein Meßtaster (24) zum Erfassen der Position des Konus oder Keils (21) vorgesehen ist.

7. Vorrichtung nach einem der Ansprüche 1 bis 6, **dadurch gekennzeichnet,** dass die Längsbohrung (16) von der arbeitsspindelseitigen Stirnfläche der Führungsspindel (4) ausgeht und mit einem Deckel (17) verschlossen ist, der den Führungszapfen (6) trägt.

8. Vorrichtung nach einem der Ansprüche 1 bis 7, **dadurch gekennzeichnet,** dass der Konus oder Keil (21) mit einem in der Längsbohrung (16) untergebrachten Hubzylinder (18, 19) verschiebbar ist.

9. Vorrichtung nach einem der Ansprüche 1 bis 8, **dadurch gekennzeichnet,** dass der Meßtaster (24) zwischen dem Deckel (17) und der freien Stirnseite des Konus oder Keils (21) angeordnet ist.

10. Vorrichtung nach einem der Ansprüche 1 bis 9, **gekennzeichnet durch** induktive Meßtaster (14, 24).

11. Vorrichtung nach einem der Ansprüche 1 bis 10, **gekennzeichnet durch** eine Infrarot-Datenübertragung der von den Meßtastern (14, 24) abgegebene Meßsignale.
